# EUROPEAN PATENT APPLICATION

(11) **EP 4 050 134 A1**
(43) Date of publication of application: **31.08.2022**
(21) Application number: 20894043.7
(22) Date of filing: 25.11.2020
(51) Int. Cl.: D01F 1/10, D01F 6/50

(54) **POLYACETAL FIBERS, METHOD FOR PRODUCING SAME AND MATERIAL FOR DRAWING**

(30) Priority: 29.11.2019 JP 2019216893
(71) Applicant: MITSUBISHI GAS CHEMICAL COMPANY, INC., Chiyoda-ku Tokyo 100-8324 (JP)
(72) Inventor: SUNAGA, Daisuke, Tokyo 100-8324 (JP); MIKAMI, Sunao, Kamisu-shi, Ibaraki 314-0102 (JP)
(74) Representative: Müller-Boré & Partner Patentanwälte PartG mbB
(86) International application number: PCT/JP2020/043713
(87) International publication number: WO 2021/106887

(57) **Abstract**

Polyacetal fibers having excellent spinning stability and uniform appearance and production methods thereof have been awaited. According to the invention, a polyacetal fiber, comprising 0.05 to 1.3 parts by mass of an inorganic filler with respect to 100 parts by mass of a polyacetal resin, in which the inorganic filler has a primary average particle size of more than 0.5 µm and 10 µm or less, and the polyacetal fiber has a melt flow index of 15 to 45 g/10 min, is provided.

## Description

### Technical Field

The present invention relates to a polyacetal fiber comprising a polyacetal resin and an inorganic filler, a method of producing the same, and a material for drawing comprising the polyacetal resin and the inorganic filler.

### Background Art

Polyacetal is also referred to as "oxymethylene polymer" and includes a homopolymer in which formaldehyde is polymerized and a copolymer in which a cyclic oligomer such as trioxane and a comonomer are copolymerized.

Polyacetal has an excellent balance of mechanical properties, chemical resistance, slidability, and the like, and is easy to process. Therefore, as a typical engineering plastic, polyacetal is widely used mainly for electric/electronic parts, automobile parts, and other various mechanical parts. However, due to physical properties such as high crystallinity, polyacetal has been difficult to apply to fibers and materials for drawing. Further, polyacetal fibers have a problem that fiber thickness tends to be uneven.

In order to solve the above problems, Patent Literature 1 discloses a polyoxymethylene fiber consisting of a polyoxymethylene copolymer for which the semi-crystallization time is 30 seconds or more when the temperature is lowered from the molten state at 200°C to 150°C at a cooling rate of 80°C/min and kept constant at a temperature of 150°C. However, it is necessary to draw a fibrous material discharged from the discharge nozzle of a melt spinning machine while heating to 140°C to 250°C during spinning of the fiber disclosed in Patent Literature 1 when producing a polyoxymethylene fiber by melt-spinning a polyoxymethylene copolymer, making the operation complicated.

### Citation List

### Patent Literature

Patent Literature 1: JP 2003-089925 A

### Summary of Invention

### Problem to be solved by the Invention

Polyacetal fibers having excellent spinning stability and uniform appearance and production methods thereof have been awaited.

### Means for solving the problem

According to the present invention, the following are provided.
[1] A polyacetal fiber, comprising 0.05 to 1.3 parts by mass of an inorganic filler with respect to 100 parts by mass of a polyacetal resin, wherein
   the inorganic filler has a primary average particle size of more than 0.5 µm and 10 µm or less, and
   the polyacetal fiber has a melt flow index of 15 to 45 g/10 min.
[2] The polyacetal fiber according to the above [1], wherein the inorganic filler comprises at least one of magnesium and silicon.
[3] The polyacetal fiber according to the above [1] or [2], wherein the inorganic filler is talc.
[4] The polyacetal fiber according to any one of the above [1] to [3], which is a multifilament.
[5] The polyacetal fiber according to the above [4], which is a multifilament having a thickness of 36 to 400 denier.
[6] The polyacetal fiber according to the above [4] or [5], which is a multifilament consisting of 12 to 48 monofilaments.
[7] The polyacetal fiber according to any one of the above [4] to [6], which is a multifilament consisting of monofilaments having a thickness of 1 to 12 denier.
[8] The polyacetal fiber according to any one of the above [1] to [7], which is used for woven fabric, knitted fabric, or non-woven fabric.
[9] A material for drawing, comprising 0.05 to 1.3 parts by mass of an inorganic filler with respect to 100 parts by mass of a polyacetal resin, wherein
   the inorganic filler has a primary average particle size of more than 0.5 µm and 10 µm or less, and
   the material has a melt flow index of 15 to 45 g/10 min.
[10] A method of producing a polyacetal fiber, comprising melt-spinning a polyacetal resin composition so as to produce a polyacetal fiber, wherein the polyacetal resin composition comprises 0.05 to 1.3 parts by mass of an inorganic filler with respect to 100 parts by mass of a polyacetal resin, wherein the inorganic filler has a primary average particle size of more than 0.5 µm and 10 µm or less, and the polyacetal resin composition has a melt flow index of 15 to 45 g/10 min.

### Advantageous Effects of Invention

According to the present invention, a polyacetal fiber having excellent spinning stability and uniform appearance can be provided.

### Brief Description of Drawings

[Figure 1] Figure 1 is a photograph showing an example of polyacetal fibers corresponding to Evaluations 1, 4, and 6 when evaluating appearance unevenness in the Examples and Comparative Examples.
[Figure 2] Figure 2 is a schematic diagram showing an example of a polyacetal fiber spinning machine.

### Description of Embodiments

### < Polyacetal Fiber >

One aspect of the present invention relates to a polyacetal fiber comprising a polyacetal resin and an inorganic filler. In the polyacetal fiber of the present invention, the occurrence of "thread breakage" that a filament (mainly monofilament in the case of multifilament) breaks when wound up during spinning is suppressed, and the occurrence of "appearance unevenness" is also suppressed because the polyacetal fiber of the present invention has uniform appearance. As described above, the spinning stability is excellent, and the appearance is uniform.

### (Polyacetal Resin)

Polyacetal resin is also referred to as "oxymethylene polymer" and includes a homopolymer and a copolymer. When the term "polyacetal resin" or "oxymethylene polymer" is simply used herein, it means both a homopolymer and a copolymer, and a homopolymer and a copolymer are called "oxymethylene homopolymer" and "oxymethylene copolymer," respectively.

A polyacetal resin has an oxymethylene unit (-OCH₂-) in the molecule. In a case where the polyacetal resin is an oxymethylene copolymer, it has an oxyalkylene unit represented by the following Formula (1) in addition to the oxymethylene unit: 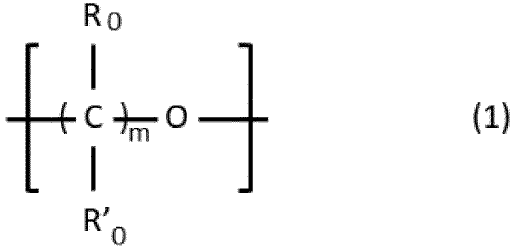 wherein R₀ and R₀'may be the same or different and each represent a hydrogen atom, an alkyl group, a phenyl group, or an oxyalkylene group, and m is an integer of 2 to 6.

The alkyl group represented by R₀ and/or R₀' is a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable.

The alkyl group represented by R₀ and/or R₀' is unsubstituted or substituted. Examples of a substituent include a hydroxy group, an amino group, an alkoxy group, an alkenyloxymethyl group, and a halogen. Examples of the alkoxy group as a substituent include methoxy, ethoxy, and propoxy. Examples of the alkenyloxymethyl group as a substituent include allyloxymethyl. The term "halogen" described herein means an element belonging to Group 17 of the periodic table, and specific examples thereof include fluorine, chlorine, bromine, iodine, and astatine.

The phenyl group represented by R₀ and/or R₀' is unsubstituted or substituted. Examples of a substituent include an alkyl group, an aryl group, and a halogen. Examples of the alkyl group as a substituent include a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable. Examples of the aryl group as a substituent include phenyl, naphthyl, and anthracyl.

The oxyalkylene group represented by R₀ and/or R₀' is an alkyl group interrupted by one or more ether bonds, and preferable examples thereof include a group represented by the following Formula (2):

-CH₂-O-(R₁-O)ₚ-R₂ (2)

wherein R₁ represents an alkylene group, p represents an integer of 0 to 20, R₂ represents a hydrogen atom, an alkyl group, a phenyl group, or a glycidyl group. Each (R₁-O) unit may be the same or different.

The alkylene group represented by R₁ is a linear or branched alkylene group having 2 to 20 carbon atoms. Examples thereof include ethylene, propylene, butylene, and 2-ethylhexylene, and ethylene or propylene is preferable. The alkylene group represented by R₁ is unsubstituted or substituted. Examples of a substituent include a hydroxy group, an amino group, an alkoxy group, an alkenyloxymethyl group, and a halogen. Examples of the alkoxy group as a substituent include methoxy, ethoxy, and propoxy. Examples of the alkenyloxymethyl group as a substituent include allyloxymethyl.

Examples of the alkyl group represented by R₂ include a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable. The alkyl group represented by R₂ is unsubstituted or substituted. Examples of a substituent include a hydroxy group, an amino group, an alkoxy group, an alkenyloxymethyl group, and a halogen. Examples of the alkoxy group as a substituent include methoxy, ethoxy, and propoxy. Examples of the alkenyloxymethyl group as a substituent include allyloxymethyl.

The phenyl group represented by R₂ is unsubstituted or substituted. Examples of a substituent include an alkyl group, an aryl group, and a halogen. Examples of the alkyl group as a substituent include a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable. Examples of the aryl group as a substituent include phenyl, naphthyl, and anthracyl.

It is preferable that R₀ and R₀' are the same and each represent a hydrogen atom.

Examples of the oxyalkylene unit represented by Formula (1) above include an oxyethylene unit, an oxypropylene unit, an oxybutylene unit, an oxypentylene unit, and an oxyhexylene unit. An oxyethylene unit, an oxypropylene unit, or an oxybutylene unit is preferable, and an oxyethylene unit is more preferable.

In a case where the polyacetal resin is an oxymethylene copolymer, it can further have a unit represented by the following Formula (3):

-CH(CH₃)-CHR₃- (3)

wherein R₃ is a group represented by the following Formula (4):

-O-(R₁-O)ₚ-R₄ (4)

wherein R₄ represents a hydrogen atom, an alkyl group, an alkenyl group, a phenyl group or a phenylalkyl group, and R₁ and p are as defined by Formula (2) above.

Examples of the alkyl group represented by R₄ include a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable.

The alkyl group represented by R₄ is unsubstituted or substituted. Examples of a substituent include a hydroxy group, an amino group, an alkoxy group, an alkenyloxymethyl group, and a halogen. Examples of the alkoxy group as a substituent include methoxy, ethoxy, and propoxy. Examples of the alkenyloxymethyl group as a substituent include allyloxymethyl.

The alkenyl group represented by R₄ is a linear or branched alkenyl group having 2 to 20 carbon atoms, and examples thereof include vinyl, allyl, and 3-butenyl. The alkenyl group represented by R₄ is unsubstituted or substituted. Examples of a substituent include a hydroxy group, an amino group, an alkoxy group, an alkenyloxymethyl group, and a halogen. Examples of the alkoxy group as a substituent include methoxy, ethoxy, and propoxy. Examples of the alkenyloxymethyl group as a substituent include allyloxymethyl.

The phenyl group represented by R₄ is unsubstituted or substituted. Examples of a substituent include an alkyl group, an aryl group, and a halogen. Examples of the alkyl group as a substituent include a linear or branched alkyl group having 1 to 20 carbon atoms. Examples thereof include methyl, ethyl, n-propyl, i-propyl, n-butyl, i-butyl, t-butyl, pentyl, hexyl, decyl, dodecyl, and octadecyl. A linear or branched alkyl group having 1 to 4 carbon atoms is preferable. Examples of the aryl group as a substituent include phenyl, naphthyl, and anthracyl.

Examples of the alkyl moiety and the phenyl moiety in the phenylalkyl group represented by R₄ include the examples of the alkyl group and the phenyl group represented by R₄ described above. Examples of the phenylalkyl group include benzyl, phenylethyl, phenylbutyl, 2-methoxybenzyl, 4-methoxybenzyl, and 4-(allyloxymethyl)benzyl.

In a case where the polyacetal resin is an oxymethylene copolymer, the polyacetal resin comprises 0.5% to 7.5% by mol of the repeating unit represented by Formula (1) or (3) above in a preferable aspect.

In a case where there is a cross-linked structure in the polyacetal resin, the alkene-derived structure in a glycidyl group or an alkenyloxymethyl group which is a substituent in the group represented by Formula (2) above, or the alkenyl group in the group represented by Formula (4) above can serve as a cross-linking point in a further polymerization reaction, such that a cross-linked structure is formed.

### (Inorganic Filler)

The polyacetal fiber of the present invention comprises an inorganic filler.

A material of the inorganic filler is not particularly limited, and for example, glass fiber, talc, mica, calcium carbonate, potassium titanate whisker, pigment, boron nitride, or the like can be used. An inorganic filler comprising at least one of magnesium and silicon is preferable, talc or mica is more preferable, and talc is particularly preferable.

The primary average particle size of the inorganic filler is more than 0.5 µm and 10 µm or less. When an inorganic filler having a primary average particle size within this range is used, filament breakage and appearance unevenness are suppressed. Within this numerical range, as the primary average particle size is decreased, the filament breakage suppressing effect and the appearance unevenness suppressing effect tend to be excellent. Therefore, the primary average particle size is preferably 0.6 to 9.0 µm, and particularly preferably 0.7 to 8.0 µm. More preferably, it is 0.7 µm or more and less than 4.8 µm, and most preferably 0.7 to 1.2 µm.

The primary average particle size is a 50% volume average particle size obtained from the particle size distribution determined by the laser diffraction method, as shown in the Examples described later.

The polyacetal fiber of the present invention comprises an inorganic filler in an amount of 0.05 to 1.3 parts by mass with respect to 100 parts by mass of the polyacetal resin. When the amount of the inorganic filler is excessively decreased or increased, filament breakage and appearance unevenness are likely to occur. In addition, the fiber strength tends to be impaired. The content of the inorganic filler is preferably 0.06 to 1.0 parts by mass, more preferably 0.07 to 0.8 parts by mass, and particularly preferably 0.07 to 0.5 parts by mass. Most preferably, it is 0.07 to 0.3 parts by mass.

### (Other Components)

In addition to the polyacetal resin and the inorganic filler, the polyacetal fiber of the present invention may comprise known components to be blended in the polyacetal resin composition during production. Known components will be described in detail later.

The melt flow index of the polyacetal fiber of the present invention is 15 to 45 g/10 min, preferably 18 to 42 g/10 min, and particularly preferably 20 to 40 g/10 min from the viewpoint of neatly winding the fiber during spinning. When the value of the melt flow index is excessively small, some of the melt-spun products may or may not be solidified by the take-up step of melt spinning, which may lead to appearance unevenness. When the value of the melt flow index is excessively large, thread breakage may occur frequently in the drawing step and the fiber may not be sufficiently drawn. As a result, regardless of whether the value of the melt flow index is excessively small or large, filament breakage and appearance unevenness are likely to occur.

The melt flow index can be measured by a method conforming to ISO 1133 using, for example, a melt indexer manufactured by TOYO SEIKI CO., LTD. The measurement conditions are 190°C and a load of 2.16 kg.

The polyacetal fiber of the present invention may be a monofilament or a multifilament in which a plurality of filaments are bundled, but a multifilament is preferable.

The thickness of the multifilament may be appropriately determined depending on the intended use, but is preferably 36 to 400 denier, and more preferably 40 to 350 denier.

The number of monofilaments constituting the multifilament may be appropriately determined depending on the intended use, but is preferably 12 to 48, and more preferably 20 to 40.

The thickness of the monofilament constituting the multifilament may be appropriately determined depending on the intended use, but is preferably 1 to 12 denier, and more preferably 3 to 10 denier.

The polyacetal fiber of the present invention can be applied to various uses such as woven fabric, knitted fabric, non-woven fabric, strings, and papermaking. Preferably, it can be used for woven fabric, knitted fabric, or non-woven fabric.

### < Method of Producing Polyacetal Fiber >

The polyacetal fiber of the present invention can be produced by any method. It is, however, preferable that a polyacetal resin composition comprising an inorganic filler having a primary average particle size is within the above-described numerical range (more than 0.5 µm and 10 µm or less, preferably 0.6 to 9.0 µm, more preferably 0.7 to 8.0 µm, particularly preferably 0.7 µm or more and less than 4.8 µm, and most preferably 0.7 to 1.2 µm) in the above-described amount (0.05 to 1.3 parts by mass, preferably 0.06 to 1.0 parts by mass, more preferably 0.07 to 0.8 parts by mass, particularly preferably 0.07 to 0.5 parts by mass, and most preferably 0.07 to 0.3 parts by mass per 100 parts by mass of a polyacetal resin) and having a melt flow index in the above-described numerical range (15 to 45 g/10 min, preferably 18 to 42 g/10 min, and particularly preferably 20 to 40 g/10 min) is prepared, and this polyacetal resin composition is melt-spun, thereby producing the polyacetal fiber.

### (Method of Producing Polyacetal Resin Composition)

The method of producing a polyacetal resin composition is not particularly limited, but examples thereof include a method comprising obtaining a polyacetal resin by performing a polymerization reaction using a cyclic oligomer and a polymerization catalyst, and adding an inorganic filler to the obtained polyacetal resin. In a case where the polyacetal resin is an oxymethylene copolymer, a comonomer is also used in the polymerization reaction.

As the cyclic oligomer, a cyclic oligomer of formaldehyde such as trioxane which is a cyclic trimer of formaldehyde or tetraoxane which is a cyclic tetramer of formaldehyde is used, and trioxane is preferable. Although trioxane may comprise water, formic acid, methanol, and formaldehyde as impurities that are inevitably generated during industrial production, trioxane comprising these impurities can also be used.

In a case where the polyacetal resin is an oxymethylene copolymer, the comonomer is not particularly limited, but a cyclic ether or cyclic formal having at least one carbon-carbon bond is preferable. Examples of a cyclic ether or cyclic formal having at least one carbon-carbon bond include: oxepanes such as 1,3-dioxolane, 2-ethyl-1,3-dioxolane, 2-propyl-1,3-dioxolane, 2-butyl-1,3-dioxolane, 2,2-dimethyl-1,3-dioxolane, 2-phenyl-2-methyl-1,3-dioxolane, 4-methyl-1,3-dioxolane, 2,4-dimethyl-1,3-dioxolane, 2-ethyl-4-methyl-1,3-dioxolane, 4,4-dimethyl-1,3-dioxolane, 4,5-dimethyl-1,3-dioxolane, 2,2,4-trimethyl-1,3-dioxolane, 4-hydroxymethyl-1,3-dioxolane, 4-butyloxymethyl-1,3-dioxolane, 4-phenoxymethyl-1,3-dioxolane, 4-chloromethyl-1,3-dioxolane, 1,3-dioxabicyclo[3,4,0]nonane, ethylene oxide, propylene oxide, butylene oxide, epichlorohydrin, styrene oxide, oxytan, 3,3-bis(chloromethyl)oxetane, tetrahydrofuran, and 1,3-dioxepan, and 1,3,5-trioxepan; oxocans such as 1,3,6-trioxocan; and oxetanes. These comonomer forms an oxyalkylene unit represented by Formula (1) in which R₀ and R₀' are the same and each are a hydrogen atom. As the cyclic ether or cyclic formal having at least one carbon-carbon bond, a cyclic formal having an oxyalkylene group having 2 carbon atoms (-OCH₂CH₂-) is preferable, and 1,3-dioxolane is particularly preferable.

In the present invention, the unit represented by Formula (1) in which R₀ and R₀' are not hydrogen atoms at the same time (one of R₀ and R₀' is a non-hydrogen atom, or both are non-hydrogen atoms) can be formed, for example, by copolymerizing a glycidyl ether compound and/or an epoxy compound.

The glycidyl ether and epoxy compounds are not particularly limited, but examples thereof include: epichlorohydrin; alkyl glycidyl formals such as methyl glycidyl formal, ethyl glycidyl formal, propyl glycidyl formal, and butyl glycidyl formal; diglycidyl ethers such as ethylene glycol diglycidyl ether, propylene glycol diglycidyl ether, 1,4-butanediol diglycidyl ether, hexamethylene glycol diglycidyl ether, resorcinol diglycidyl ether, bisphenol A diglycidyl ether, hydroquinone diglycidyl ether, polyethylene glycol diglycidyl ether, polypropylene glycol diglycidyl ether, and polybutylene glycol diglycidyl ether; triglycidyl ethers such as glycerin triglycidyl ether and trimethylolpropane triglycidyl ether; and tetraglycidyl ethers such as pentaerythritol tetraglycidyl ether.

According to the present invention, the oxymethylene copolymer may be a bipolymer or a multi-component copolymer. As the oxymethylene copolymer, in addition to an oxymethylene copolymer having an oxymethylene unit and an oxyalkylene unit represented by Formula (1) above, an oxymethylene copolymer comprising an oxymethylene unit, an oxyalkylene unit represented by Formula (1), and a unit represented by Formula (3) above can be widely used. The oxymethylene copolymer may have a crosslinked structure. In the present invention, the unit represented by Formula (3) can be formed by, for example, copolymerizing an allyl ether compound.

Examples of the allyl ether compound include polyethylene glycol allyl ether, methoxypolyethylene glycol allyl ether, polyethylene glycol-polypropylene glycol allyl ether, polypropylene glycol allyl ether, butoxy polyethylene glycol-polypropylene glycol allyl ether, polypropylene glycol diallyl ether, phenylethyl allyl ether, phenylbutyl allyl ether, 4-methoxybenzyl allyl ether, 2-methoxybenzyl allyl ether, and 1,4-diallyloxy methyl benzene.

The blending amount of the comonomer may be appropriately determined according to the type of comonomer, physical properties of the oxymethylene copolymer of interest, and the like, but is preferably an amount of 0.1 to 20 parts by mass, and particularly 1 to 15 parts by mass with respect to 100 parts by mass of the cyclic oligomer which is the main monomer.

In a case where the polyacetal resin is an oxymethylene copolymer, the oxymethylene copolymer preferably has an oxymethylene unit and an oxyethylene unit (included in the oxyalkylene unit represented by Formula (1) above), and the content of oxyethylene units per 100 mol of oxymethylene units is preferably 0.5 to 7.5 mol, more preferably 0.5 to 7.0 mol, still more preferably 1.0 to 4.0 mol, and particularly preferably 1.0 to 2.5 mol. The contents of oxymethylene units and oxyethylene units in the oxymethylene copolymer can be measured by the nuclear magnetic resonance (NMR) method.

Any polymer catalyst can be used as a polymerization catalyst used in producing the polyacetal resin. For example, cationic polymerization catalysts such as a boron trifluoride compound, an arylboron fluoride compound, perchloric acid, and heteropolyacid can be used. Such polymerization catalysts may be used singly or in combination of two or more. The amount of a polymerization catalyst used may be appropriately determined. The catalysts may be individually introduced into a reaction system, or may be mixed in advance to form a polymerization catalyst mixture before being supplied to a polymerization reaction.

When producing a polyacetal resin, a chain transfer agent (also referred to as a "molecular weight adjuster" or "viscosity adjuster") may be used to adjust the degree of polymerization. The type of chain transfer agent is not particularly limited, but examples thereof include carboxylic acid, carboxylic acid anhydrides, esters, amides, imides, phenols, and acetal compounds. In particular, phenol, 2,6-dimethylphenol, methylal, polyacetal dimethoxide, methoxymethylal, dimethoxymethylal, trimethoxymethylal, and oxymethylene di-n-butyl ether are preferably used. Of these, methylal is most preferable. The chain transfer agent can be used by diluting it with a solvent inert to a polymerization reaction, if necessary.

The content of the chain transfer agent may be appropriately determined according to MFI and the like. In general, it is adjusted to 0.5% by mass or less with respect to the cyclic oligomers in the raw materials for polymerization. The lower limit of the addition amount is not particularly limited, and may be more than 0% by mass.

The above-described raw materials are blended such that the MFI of the polyacetal resin composition is 15 to 45 g/10 min, preferably 18 to 42 g/10 min, and more preferably 20 to 40 g/10 min, and then supplied to a polymerization reaction. The form of polymerization reaction is not particularly limited, and a polymerization reaction can be carried out in the same manner as a conventionally known method of producing a polyacetal resin. Specifically, it may be any of bulk polymerization, suspension polymerization, solution polymerization, melt polymerization, and the like, but bulk polymerization is particularly preferable.

Bulk polymerization is a polymerization method that uses a monomer in a molten state and substantially does not use a solvent. In bulk polymerization, as the polymerization proceeds, a polymer crystallizes in the mixed solution of monomers, and eventually the entire system is bulked and powdered, thereby obtaining a solid polymer. The polymerization is carried out using a known polymerization apparatus in the absence of oxygen, preferably in a nitrogen atmosphere.

The polymerization catalyst may be added directly to the reaction system. It is, however, preferable to dilute the polymerization catalyst with an organic solvent that does not adversely affect the polymerization reaction such that the catalyst can be uniformly dispersed in the reaction system.

The temperature of the polymerization reaction is not particularly limited, and is usually 60°C to 120°C. The pressure during the polymerization reaction is not particularly limited, but in a case where the atmospheric pressure is 100 kPa, the absolute pressure is preferably in a range of 99.0 to 101.00 kPa. The time of polymerization reaction (residence time in the polymerization apparatus) is not particularly limited, and is usually 2 to 30 minutes. In a case where stirring is performed during the polymerization reaction, the rotation speed of a stirring blade is preferably 10 to 100 rpm, and particularly preferably 20 to 60 rpm.

After the polymerization reaction has sufficiently proceeded, if necessary, a known terminator may be mixed with the reaction system to deactivate the polymerization catalyst and the polymerization growth terminal so as to terminate the polymerization reaction. This step is called a termination step. Examples of known terminators include: trivalent organophosphorus compounds such as triphenylphosphine; alkaline metal hydroxides; alkaline earth metal hydroxides; and amine compounds such as diethylamine, triethylamine, tributylamine, triethanolamine, N-methyldiethanolamine, N,N-diethylhydroxylamine, N-isopropyl hydroxylamine, N,N-bis(octadecyl)hydroxylamine, and N,N-dibenzylhydroxylamine.

The amount of the terminator added is not particularly limited as long as it is sufficient to inactivate the catalyst, but the molar ratio to the catalyst is usually in the range of 1.0 × 10⁻¹ to 1.0 × 10¹.

The terminator may be used in the form of a solution or suspension.

The temperature at which the terminator is added and mixed is not particularly limited, and is preferably 0°C to 160°C, and particularly preferably 0°C to 120°C. In addition, the pressure is not particularly limited, but in a case where the atmospheric pressure is 100 kPa, the absolute pressure is preferably in a range of 99.0 to 101.0 kPa. The time for mixing after the addition (residence time in a mixer) is not particularly limited, and is preferably 1 to 150 minutes, and particularly preferably 1 to 120 minutes.

A crude polyacetal resin is obtained by the polymerization reaction and the termination step which is appropriately performed. The crude polyacetal resin is in a state before removing unreacted raw materials and the like.

After the polymerization reaction has proceeded sufficiently, and the polymerization termination step performed as needed has been completed to obtain a crude polyacetal resin, the crude polyacetal resin discharged from the polymerization apparatus is pulverized by a turbo mill or the like, the pulverized crude polymer is blended with a known stabilizer, and heated to be melt-kneaded by a single-screw or twin-screw extruder, a twin-screw paddle-type continuous mixer, or the like. This step is called a stabilization step.

Blending may be carried out by a known method, and for example, melt-kneading may be performed using a mixer connected in series with the polymerization apparatus. The apparatus for performing melt-kneading preferably has a vent function. Examples of such an apparatus include a single-screw or multi-screw continuous extrusion kneader having at least one vent hole and a twin-screw surface renewal-type horizontal kneader. Each of these apparatuses may be used singly or they may be used in combination of two or more. In a case where a twin-screw extruder is used, the crude polymer and the stabilizer may be supplied to the twin-screw extruder on separate lines and blended in the twin-screw extruder.

Examples of known stabilizers that can be used include: antioxidants such as ethylene-bis(oxyethylene)bis[3-(5-tert-butyl-4-hydroxy-m-tolyl)propionate; heat stabilizers such as melamine; formaldehyde scavengers; and acid scavengers. Further, for example, additives such as a crystal nucleating agent, a plasticizer, a delustering agent, a foaming agent, a lubricant, a mold release agent, an antistatic agent, a UV absorber, a light stabilizer, a deodorant, a flame retardant, a sliding agent, a fragrance, and an antibacterial agent may be added.

In addition, a transesterification catalyst, various monomers, a coupling agent (e.g., a different polyfunctional isocyanate compound), a terminal treatment agent, a different resin, and a naturally-derived organic filler such as wood flour or starch may be added.

The temperature for performing melt-kneading is not particularly limited as long as it is not less than the melting point of the product obtained by the polymerization reaction, and is preferably in a temperature range of 170°C to 270°C, and more preferably 190°C to 250°C.

The pressure for melt-kneading is not particularly limited. However, melt-kneading is preferably performed under reduced pressure together with degassing treatment in order to remove a cyclic oligomer of an unreacted raw material, a formaldehyde component from the cyclic oligomer, formaldehyde derived from the hemiformal terminal, and the like. In the case of using the above-described apparatus, degassing under reduced pressure is performed through the above-described vent hole. Therefore, in a case where the atmospheric pressure is 100 kPa, the pressure for melt-kneading is preferably in a range of 10 to 100 kPa, more preferably in a range of 10 to 70 kPa, and particularly preferably in a range of 10 to 50 kPa. The rotation speed of a stirring blade during melt-kneading is preferably 50 to 200 rpm in a twin-screw extruder. In a twin-screw surface renewal-type horizontal kneader, 1 to 100 rpm is preferable.

The time for performing melt-kneading (residence time in a melt-kneader) is not particularly limited, and is preferably 1 to 60 minutes, and particularly preferably 1 to 40 minutes.

The composition after the stabilization step is pulverized as needed, an inorganic filler having the above-described primary average particle size is blended in an amount such that the inorganic filler content of the eventually obtained polyacetal fiber becomes the above-described value, followed by melt-kneading. The blending method and conditions, as well as the melt-kneading method and conditions, are the same as in the stabilization step.

The above-described step of producing a polyacetal resin composition is an example, and the steps may be added or omitted as appropriate, and the content of each step may be changed. For example, the inorganic filler may be blended and melt-kneaded with a known stabilizer in the stabilization step rather than after the stabilization step. Further, after the polymerization reaction is terminated and before stabilization, if necessary, washing of the crude polymer, separation and recovery of an unreacted monomer, drying, and the like may be carried out. Furthermore, in a case where purification is required, after stabilization, washing, separation and recovery of an unreacted monomer, drying, and the like may be carried out. Furthermore, as long as the object of the present invention is not impaired, the above-described materials may be used in a step different from the above-described steps, and for example, an antioxidant or a heat stabilizer may be used in the polymerization termination step.

### (Spinning)

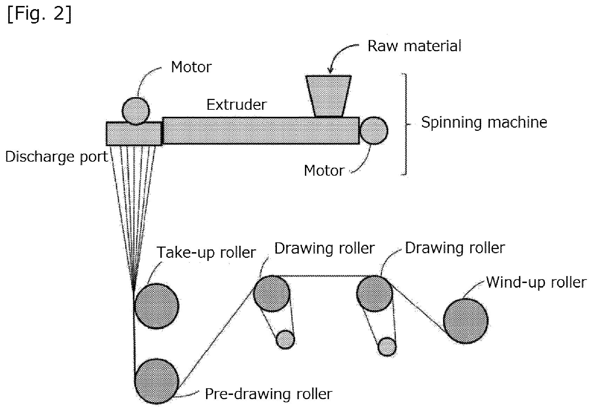

The polyacetal resin composition is subjected to a known melt-spinning method so as to produce a polyacetal fiber. One aspect of the spinning method will be described with reference to Figure 2.

A polyacetal fiber is produced by taking up a plurality of fibrous matters (filaments) discharged from the discharge port of a spinning machine with a take-up roller so as to form a fiber, and further drawing the fiber using a pre-drawing roller and a drawing roller. If necessary, the drawn fiber may be wound up by a wind-up roller after the drawing step. It is preferable that the take-up step and the drawing step are continuous steps. The method of producing a polyacetal fiber of the present invention can be used not only for the multifilament spinning method as shown in Figure 2 but also for the monofilament spinning method.

The configuration of the spinning machine used in the production method of the present invention is not particularly limited as long as it can melt a polyacetal resin composition and discharge a polyacetal fiber from the discharge port. If necessary, the polyacetal resin composition may be melt-kneaded in a spinning machine equipped with an extruder or the like. Examples of the spinning machine include a multifilament or monofilament melt-spinning machine composed of a general single-screw extruder, a gear pump, a screen, and a die. Further, the cylinder temperature of the extruder, the gear pump temperature, the number of holes of the discharge nozzle, and the like can be appropriately adjusted as needed. Further, the fineness (fiber thickness) of a drawn fiber can be appropriately adjusted based on the feed amount of raw materials and the wind-up roller speed.

The filament discharged from the discharge port of the spinning machine is first taken up as a polyacetal fiber by the take-up roller, transferred to a pre-drawing roller, and then drawn using one or more drawing rollers. Drawing allows the tensile strength of the fiber to be improved. The term "pre-drawing roller" used herein refers to a roller located between the drawing roller and the take-up roller, and usually a fiber is not drawn between the pre-drawing roller and the take-up roller or is only slightly drawn to ensure spinning stability. Further, the term "drawing roller" used herein refers to a roller located after the pre-drawing roller, and a fiber is drawn between the pre-drawing roller and the drawing roller and/or between a plurality of drawing rollers. In the method of producing a polyacetal fiber of the present invention, at least one drawing roller is used, and preferably two or more drawing rollers are used. It is preferable to use two or more drawing rollers because the polyacetal fiber can be drawn in a plurality of stages.

The take-up speed (m/min) of the take-up roller and the wind-up speed (m/min) of the wind-up roller are appropriately determined according to the conditions such as the fiber composition and the spinning machine. The wind-up speed of the wind-up roller may be substantially the same as the rotation speed of the drawing roller, and the wind-up speed may be slower by 0.1% to 10%, preferably 0.3% to 5%, and more preferably 0.5% to 2% than the rotation speed of the drawing roller in consideration of the shrinkage of the polyacetal fiber.

The draw ratio in the drawing step is preferably 1.0 to 10.0. The term "draw ratio" used herein refers to a value indicating how much the fiber before drawing is drawn in the drawing step, and can be calculated by dividing the rotation speed of the drawing roller by the rotation speed of the pre-drawing roller.

In the drawing step, preferably, drawing can be performed in multiple stages using a pre-drawing roller and two or more drawing rollers. Spinning stability and secondary workability can be improved by performing drawing in multiple stages. More preferably, in the drawing step, drawing can be performed in two steps using a pre-drawing roller and two or more drawing rollers.

In addition, preferably, the drawing step is performed using a pre-drawing roller and two or more drawing rollers. In the drawing step, a polyacetal fiber passes through a pre-drawing roller and then through two or more drawing rollers, and the temperature of at least one of the two or more drawing rollers is preferably 3°C to 20°C and more preferably 5°C to 20°C higher than the temperature of the pre-drawing roller. The drawing step is performed using a pre-drawing roller and two or more drawing rollers. In a configuration that a polyacetal fiber passes through a pre-drawing roller and then through two or more drawing rollers in the drawing step, the spinning stability is improved by adjusting the temperatures of the pre-drawing roller and the drawing rollers. More preferably, in the drawing step, the temperature of the pre-drawing roller and the temperature of at least one roller of the two or more drawing rollers are 130°C to 155°C. By adjusting the temperatures of the pre-drawing roller and the drawing rollers as described above, a polyacetal fiber having favorable spinnability can be obtained.

### < Material for Drawing >

As stated herein above, drawing can be uniformly performed during spinning by using a polyacetal resin composition comprising an inorganic filler having a specific particle size in a specific amount and having a melt flow index adjusted to a specific range. This property can be applied not only to fibers but also to other molded products that require a drawing step during production. Therefore, according to one aspect of the present invention, a material for drawing comprising 0.05 to 1.3 parts by mass of an inorganic filler having a primary average particle size of more than 0.5 µm and 10 µm or less with respect to 100 parts by mass of a polyacetal resin, the material having a melt flow index of 15 to 45 g/10 min, is provided. The material for drawing of the present invention may have the characteristics described herein in the section on the polyacetal fiber.

### Examples

The present invention will be described in more detail with reference to the Examples below, but the present invention is not limited to these Examples.

The measurement and evaluation of physical properties in the Examples and Comparative Examples described herein were carried out by the following methods.

### < Primary Average Particle Size >

Each of inorganic fillers used in the Examples and Comparative Examples was taken in an amount of 3 to 4 spoons with a small stainless dispensing spoon and placed in a glass bottle, 5 ml of water was collected therein, and the bottle was sealed, thereby obtaining a sample. After stirring each obtained sample, the particle size distribution was determined by laser diffraction. The 50% volume average particle size obtained from the determined particle size distribution was designated as the primary average particle size.

### < Melt Flow Index >

A melt indexer manufactured by TOYO SEIKI CO., LTD. was used as a measuring apparatus, and the melt flow index (hereinafter referred to as "MFI") of polyacetal (B) used in each of the Examples and Comparative Examples was measured. The measurement was performed under the conditions of a temperature of 190°C and a load of 2.16 kg in accordance with ISO 1133.

### < Filament Breakage Frequency >

When fibers are wound up, the fibers appear to be motionless at the wind-up part by continuously irradiating the fibers with strobe light having the same frequency as the wind-up speed. At such time, when filament breakage (monofilament breakage) occurs, fluff forms on the surface of the wind-up roller. This fluff formation was visually counted. The evaluation criteria are as follows.
1) No filament breakage is observed even once in 10 minutes.
2) Filament breakage can be confirmed only once in 10 minutes.
3) Filament breakage can be confirmed only once in 3 minutes.
4) Filament breakage can be confirmed once or twice in 1 minute.
5) Filament breakage can be confirmed 3 to 6 times in 1 minute.
6) Filament breakage can be confirmed 7 to 9 times in 1 minute.
7) Filament breakage can be confirmed 10 times or more in 1 minute.
8) No fibers can be obtained.

### < Appearance Unevenness >

In a case where a polyacetal fiber can be properly drawn, the appearance becomes evenly transparent, but in a case where a polyacetal fiber is not uniformly drawn due to some external factors, the portion becomes white and opaque. Therefore, a certain area of a fiber bobbin obtained in each of the Examples and Comparative Examples was observed, and the frequency of the occurrence of opaque portions was visually counted. The evaluation criteria are as follows.
1) The whole area looks transparent.
2) Only one white opaque portion can be seen in a 15 cm × 15 cm area of the bobbin.
3) Only one white opaque portion can be seen in a 5 cm × 5 cm area of the bobbin.
4) Two or three white opaque portions can be seen in a 5 cm × 5 cm area of the bobbin.
5) Four to six white opaque portions can be seen in a 5 cm × 5 cm area of the bobbin.
6) Seven to nine white opaque portions can be seen in a 5 cm × 5 cm area of the bobbin.
7) Ten or more white opaque portions can be seen in a 5 cm × 5 cm area of the bobbin.

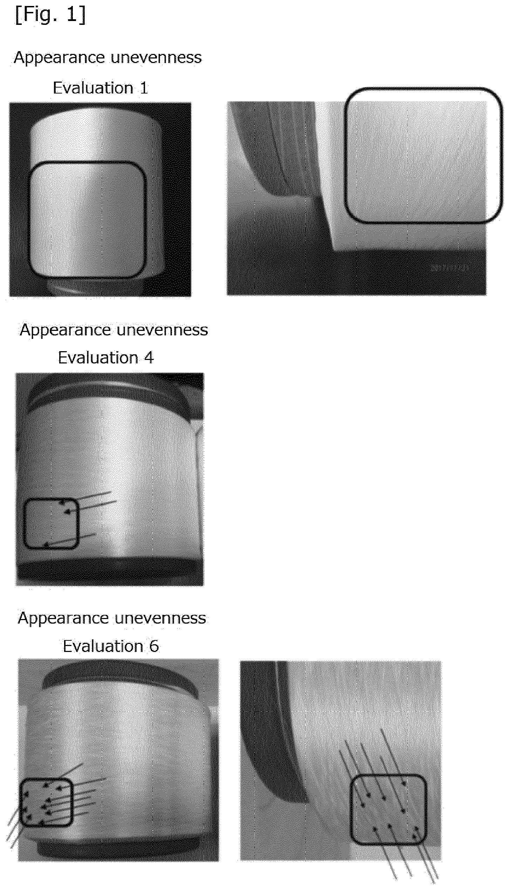

Among the above-described evaluation criteria, one example of each of Evaluations 1, 4, and 6 is shown in Figure 1.

### < Maximum Tensile Strength >

The polyacetal fibers obtained in the Examples and Comparative Examples were temperature-controlled and humidity-controlled for 24 hours or more in an environment of a temperature of 23°C and a humidity of 50%. The temperature-controlled and humidity-controlled fibers were examined by a tensile test using an Autograph AGS-X 1 kN manufactured by Shimadzu Corporation. A 120-mm length sample of each fiber was pulled at a speed of 100 mm/min.

### < Example 1 >

### (1) Preparation of Polyacetal

A polyacetal resin composition (hereinafter sometimes referred to as "polyacetal (B)"), which is a raw material for polyacetal fibers, was prepared by the following method.

First, 100 parts by mass of trioxane and 4.0 parts by mass of 1,3-dioxolane serving as a comonomer were mixed, 0.045 mmol of boron trifluoride diethyl etherate per mole of trioxane was supplied as a catalyst, and polymerization was carried out in a twin-screw kneader with paddles that intermesh with each other. At this time, 0.12 parts by mass of methylal was added as a viscosity adjuster to 100 parts by mass of trioxane, thereby adjusting the viscosity. After completion of the polymerization, a small amount of a benzene solution of triphenylphosphine was added to inactivate the catalyst, and the mixture was pulverized, thereby obtaining crude polyacetal.

An additive (Irganox (registered trademark) 245 (manufactured by BASF Japan Ltd.) and melamine (manufactured by Mitsui Chemicals, Inc.) were added to the obtained crude polyacetal and blended. Then, the obtained blended product was introduced into a same-direction twin-screw extruder (manufactured by The Japan Steel Works, LTD., inner diameter 69 mm, L/D = 31.5) at 60 kg/hour, the crude polyacetal was melted at 220°C at the vent part with a reduced pressure of 20 kPa, and the melted product was continuously introduced into a twin-screw surface renewal-type horizontal kneader (effective internal volume 60L: volume obtained by subtracting the volume occupied by the stirring blades from the total internal volume). The liquid level was adjusted such that the residence time in the twin-screw surface renewal-type horizontal kneader was 25 minutes, and pelletization was carried out by continuous extraction with a gear pump while performing decompression volatilization at 220°C under a reduced pressure of 20 kPa, thereby obtaining polyacetal (A) as an intermediate raw material.

Talc having a primary average particle size of 4.8 µm (trade name: Mistron Vapor manufactured by Imerys Specialities Japan Co., Ltd.) was added in an amount of 0.07 parts by mass per 100 parts by mass of polyacetal (A), followed by blending. Then, the blended product was introduced into a same-direction twin-screw extruder (manufactured by The Japan Steel Works, LTD., inner diameter 58 mm, L/D = 49.0) at 100 kg/hour, followed by pelletization. Thus, polyacetal (B) was obtained as a raw material.

The MFI of polyacetal (B) was 27 g/10 min.

### (2) Spinning

The obtained polyacetal (B) was supplied to a spinning machine (manufactured by UNIPLAS CO., LTD.) equipped with an extruder having a cylinder setting temperature of 190°C, a gear pump, and a discharge nozzle, and spinning was performed. The discharge rate was 1 kg/h, the number of holes in the discharge nozzle was 36, the take-up speed was 100 m/min, the drawing roller speed was 500 m/min, the wind-up speed was 500 m/min, and the temperature of the drawing roller was 150°C. At this time, the draw ratio was 5.

### (3) Spinning Stability and Physical Characteristics of Obtained Fibers

A polyacetal fiber, which had a single fiber (monofilament) thickness of 8 denier, was composed of 36 monofilaments, and had a multifilament fiber thickness of 300 denier, was obtained. Various properties of the obtained polyacetal fiber were measured, and the results are shown in Table 1.

The filament breakage frequency during spinning was confirmed only once per minute. Regarding appearance unevenness, two white opaque portions were seen in a 5 cm × 5 cm area of the bobbin. The maximum tensile strength was 8.3 N.

### < Example 2 >

A polyacetal fiber was obtained in the same manner as in Example 1 except that the blending amount of talc was 0.15 parts by mass per 100 parts by mass of polyacetal (A). Various properties of the obtained polyacetal fiber were measured, and the results are shown in Table 1.

### < Example 3 >

A polyacetal fiber was obtained in the same manner as in Example 1 except that the blending amount of talc was 0.25 parts by mass per 100 parts by mass of polyacetal (A). Various properties of the obtained polyacetal fiber were measured, and the results are shown in Table 1.

### < Example 4 >

A polyacetal fiber was obtained in the same manner as in Example 2 except that talc having an average primary particle size of 1.2 µm (manufactured by Nippon Talc Co., Ltd., trade name: SG-2000) was used. Various properties of the obtained polyacetal fiber were measured, and the results are shown in Table 1.

### < Example 5 >

A polyacetal fiber was obtained in the same manner as in Example 2 except that talc having an average primary particle size of 0.7 µm (manufactured by Nippon Talc Co., Ltd., trade name: D-600) was used. Various properties of the obtained polyacetal fiber were measured, and the results are shown in Table 1.

### < Example 6 >

A polyacetal fiber was obtained in the same manner as in Example 1 except that mica having an average primary particle size of 5.4 µm (trade name: Micromica MK-100 manufactured by Katakura & Co-op Agri Corporation) was blended instead of talc in an amount of 0.08 parts by mass per 100 parts by mass of polyacetal (A). Various properties of the obtained polyacetal fiber were measured, and the results are shown in Table 1.

### < Example 7 >

A polyacetal fiber was obtained in the same manner as in Example 2 except that the MFI of polyacetal (B) was adjusted to 20 g/10 min. Various properties of the obtained polyacetal fiber were measured, and the results are shown in Table 1.

### < Example 8 >

A polyacetal fiber was obtained in the same manner as in Example 2 except that the MFI of polyacetal (B) was adjusted to 40 g/10 min. Various properties of the obtained polyacetal fiber were measured, and the results are shown in Table 1.

### < Comparative Example 1 >

A polyacetal fiber was obtained in the same manner as in Example 1 except that no inorganic filler was used. Various properties of the obtained polyacetal fiber were measured, and the results are shown in Table 1.

### < Comparative Example 2 >

A polyacetal fiber was obtained in the same manner as in Example 1 except that the amount of talc blended was 2.00 parts by mass per 100 parts by mass of polyacetal (A). Various properties of the obtained polyacetal fiber were measured, and the results are shown in Table 1.

### < Comparative Example 3 >

A polyacetal fiber was obtained in the same manner as in Example 1 except that a red pigment having an average primary particle size of 14 µm was blended instead of talc in an amount of 5.00 parts by mass per 100 parts by mass of polyacetal (A). Various properties of the obtained polyacetal fiber were measured, and the results are shown in Table 1.

< Comparative Example 4 >

A polyacetal fiber was obtained in the same manner as in Example 2 except that the MFI of polyacetal (B) was adjusted to 8 g/10 min. Various properties of the obtained polyacetal fiber were measured, and the results are shown in Table 1.

### < Comparative Example 5 >

A polyacetal fiber was obtained in the same manner as in Example 2 except that the MFI of polyacetal (B) was adjusted to 50 g/10 min. Various properties of the obtained polyacetal fiber were measured, and the results are shown in Table 1.

### < Comparative Example 6 >

A polyacetal fiber was obtained in the same manner as in Example 6 except that mica was blended in an amount of 2.00 parts by mass per 100 parts by mass of polyacetal (A). Various properties of the obtained polyacetal fiber were measured, and the results are shown in Table 1.

**[Table 1]**

| | | Unit/Criteria | Example 1 | Example 2 | Example 3 | Example 4 | Example 5 | Example 6 | Example 7 | Example 8 |
|---|---|---|---|---|---|---|---|---|---|---|
| Inorganic filler | Type | - | Talc | Talc | Talc | Talc | Talc | Mica | Talc | Talc |
| | Primary average particle size | µm | 4.8 | 4.8 | 4.8 | 1.2 | 0.7 | 5.4 | 4.8 | 4.8 |
| | Amount | phr | 0.07 | 0.15 | 0.25 | 0.15 | 0.15 | 0.08 | 0.15 | 0.15 |
| MFI of resin composition | | g/10 min | 27 | 27 | 27 | 27 | 27 | 27 | 20 | 40 |
| Filament breakage frequency | | Decreased 1←4→8 Increased | 4 | 3 | 2 | 2 | 1 | 5 | 1 | 5 |
| Appearance unevenness | | Decreased 1←4→7 Increased | 4 | 2 | 2 | 2 | 2 | 4 | 1 | 4 |
| Maximum tensile strength | | N | 8.3 | 7.6 | 8.6 | 6.5 | 7.8 | 7.4 | 7.8 | 7.4 |

| | | Unit/Criteria | Comparative Example 1 | Comparative Example 2 | Comparative Example 3 | Comparative Example 4 | Comparative Example 5 | Comparative Example 6 | | |
|---|---|---|---|---|---|---|---|---|---|---|
| Inorganic filler | Type | - | - | Talc | Pigment | Talc | Talc | Mica | | |
| | Primary average particle size | µm | - | 4.8 | 14 | 4.8 | 4.8 | 5.4 | | |
| | Amount | phr | 0 | 2.00 | 5.00 | 0.15 | 0.15 | 2.00 | | |
| MFI of resin composition | | g/10 min | 27 | 27 | 27 | 8 | 50 | 27 | | |
| Filament breakage frequency | | Decreased 1←4→8 Increased | 7 | 7 | 7 | 6 | 6 | 7 | | |
| Appearance unevenness | | Decreased 1←4→7 Increased | 7 | 4 | 5 | 5 | 5 | 5 | | |
| Maximum tensile strength | | N | 6.0 | 6.3 | 4.4 | 6.5 | 6.5 | 5.9 | | |

## Claims

1. A polyacetal fiber, comprising 0.05 to 1.3 parts by mass of an inorganic filler with respect to 100 parts by mass of a polyacetal resin, wherein
the inorganic filler has a primary average particle size of more than 0.5 µm and 10 µm or less, and
the polyacetal fiber has a melt flow index of 15 to 45 g/10 min.

2. The polyacetal fiber according to claim 1, wherein the inorganic filler comprises at least one of magnesium and silicon.

3. The polyacetal fiber according to claim 1 or 2, wherein the inorganic filler is talc.

4. The polyacetal fiber according to any one of claims 1 to 3, which is a multifilament.

5. The polyacetal fiber according to claim 4, which is a multifilament having a thickness of 36 to 400 denier.

6. The polyacetal fiber according to claim 4 or 5, which is a multifilament consisting of 12 to 48 monofilaments.

7. The polyacetal fiber according to any one of claims 4 to 6, which is a multifilament consisting of monofilaments having a thickness of 1 to 12 denier.

8. The polyacetal fiber according to any one of claims 1 to 7, which is used for woven fabric, knitted fabric, or non-woven fabric.

9. A material for drawing, comprising 0.05 to 1.3 parts by mass of an inorganic filler with respect to 100 parts by mass of a polyacetal resin, wherein
the inorganic filler has a primary average particle size of more than 0.5 µm and 10 µm or less, and
the material has a melt flow index of 15 to 45 g/10 min.

10. A method of producing a polyacetal fiber, comprising melt-spinning a polyacetal resin composition so as to produce a polyacetal fiber, wherein the polyacetal resin composition comprises 0.05 to 1.3 parts by mass of an inorganic filler with respect to 100 parts by mass of a polyacetal resin, the inorganic filler has a primary average particle size of more than 0.5 µm and 10 µm or less, and the polyacetal resin composition has a melt flow index of 15 to 45 g/10 min.
